Europäisches Patentamt

European Patent Office

Office européen des brevets

(11) Publication number: **0 216 418**
**A1**

(12) **EUROPEAN PATENT APPLICATION**

(21) Application number: 86201518.7

(51) Int. Cl.⁴: **F16L 1/04**

(22) Date of filing: 02.09.86

(30) Priority: 04.09.85 NL 8502428

(43) Date of publication of application:
01.04.87 Bulletin 87/14

(84) Designated Contracting States:
AT BE CH DE FR GB IT LI LU NL SE

(71) Applicant: WAVIN B.V.
Händellaan 251
NL-8031 EM Zwolle(NL)

(72) Inventor: Menheere, Johannes Cornelis Jozef
16, Bennekomseweg
NL-6866 DD Heelsum(NL)

(74) Representative: van der Veken, Johannes
Adriaan et al
EXTERPATENT B.V. Willem Witsenplein 4
NL-2596 BK 's-Gravenhage(NL)

(54) **Foam plastics float for locally supporting a conveying line, and a floating conveying line.**

(57) Foam plastics float for locally supporting a conveying line (3) close to the surface of a liquid; the float (1) being provided with weighting means (4) for adjusting the buoyancy of the float (1).

The weighting means (4) are positioned in such a way that the centre of gravity of the float lies eccentrically in relation to the centre line of the float, thus counteracting the rolling of the float (1) and improving stability.

The invention also relates to a floating conveying line comprising one or more floats (1) according to the invention.

FIG. 1

EP 0 216 418 A1

## Foam plastics float for locally supporting a conveying line, and a floating conveying line.

The invention relates to a foam plastics float for locally supporting a conveying line close to the surface of a liquid.

This known float is made as a connector, which can be formed around lengths of piping and is composed mainly of a foam plastics material in which tubes containing compressed air are disposed. The tubes containing air serve as reinforcement and improve the buoyancy of the floats.

When a plurality of these known floats are used for supporting a line, said line is usually disposed above the surface of the water.

An arrangement of the line in this manner nevertheless has the disadvantage that the line is very sensitive to external conditions, such as weather conditions. In particular, a line of this kind is then sensitive to winds sweeping along the surface of the water, as the result of which the line and/or the floats are often damaged by the rolling of the floats.

Another disadvantage of this known float is that because of the manner in which it is formed, it cannot be detachably connected to the length of piping to which it is attached, so that the float cannot be used for other purposes.

The present invention seeks to provide a solution to these problems and to furnish a float for locally supporting a conveying line which is not sensitive to external conditions, particularly to the action of winds sweeping along the surface of the water.

According to the present invention this aim is achieved with a float which is characterized in that it is provided with weighting means for adjusting the buoyancy of the float.

The effect can thus be achieved that the depth of immersion of the float can be accurately adjusted under the action of the load applied to it by the line which it supports, so that damage due to external conditions, such as storm damage, can be avoided.

In this connection it may be added that the displacement of liquid by the float obviously also permits a limited variability of buoyancy, although advantage can be taken of this only in a flexible forming process in the forming of the float.

The float according to the invention is in particular characterized in that the weighting means are disposed in the float in such a manner that the centre of gravity of the float lies eccentrically in relation to the centre line of the float.

When this rule is applied, the rolling of the float is counteracted and stability is greatly improved, so that even heavy storms will not cause damage.

In view of the fact that weighting means are disposed in the float, the mean relative density of the float, and therefore also the depth of immersion of the float, can be adjusted extremely accurately.

The float according to the invention is expediently characterized in that the weighting means are in the form of rods.

The float according to the invention is advantageously provided with at least one channel, which extends in the longitudinal direction of the float and is preferably closed at both ends, and in which the weighting means are disposed.

For this last-mentioned embodiment it is conceivable to provide a cavity in the longitudinal direction of the float, and to fill this cavity with a heavy material, such as concrete, steel or the like, in order to adjust the buoyancy of the float.

It is particularly advantageous to provide the channel near the outer wall of the float.

If the weighting means are disposed near the outer wall, optimum stability of the float is achieved and the rolling of the float is also counteracted in optimum manner, so that damage is avoided even in the most serious weather conditions.

In a particularly advantageous form of construction of the float according to the invention, the float is provided internally with a channel for receiving a conveying line.

This construction ensures that the float can simply be pushed around the line requiring local support, so that its attachment is obviously extremely simple.

In the case just described the float may be in the form of a thick-walled tube which is adapted to surround the line requiring support, and whose inner and outer sides are formed by walls made of hard plastics material, between which foam plastics material is disposed.

The inner and outer walls of the float body may optionally be connected together. No special requirements are usually imposed on the shape of the ends of the float, but it will be clear that a conical shape from the diameter of the outer wall to the diameter of the inner wall is extremely advantageous. Through this torpedo shape of both ends of the float it will be enSured that the resistance of this float in water flowing along it will be as low as possible, and this will apply both to floats and to the conveying line supported by them.

The embodiment just described is attractive because of its resistance to mechanical damage, but it is not essential.

An example of a float made of polyurethane foam may, depending on its method of production, have a closed polyurethane skin which also possesses good mechanical durability.

For certain applications the float may be provided with a support means fastened to its outside.

In some cases it is in fact not only necessary to simply to construct a conveying line leading to a station located elsewhere, but other lines must often also be supported; these may consist of service lines, for example water pipelines and/or electric cables. An example is a situation in which a submerged pump disposed under water pumps in water which has to be conveyed through the main pipe to an on-shore installation, while a fresh water pipe and the supply line for the submerged pump must be laid from the shore to the pump. A situation of this kind exists for example in the case of projects in the Dead Sea, where water containing potassium salts has to be pumped up and conveyed to the shore, while a fresh water pipe and an electricity cable have to be taken to the pumping station.

In this case the float according to the invention is particularly advantageously characterized in that the float is provided with a support means fastened to its outside.

With the aid of the buoyancy adjustment according to the invention it can be ensured that said fresh water pipe and electricity cable project only slightly above the surface of the liquid, so that the support means, together with other lines and/or cables clamped thereto, are not greatly exposed to the action of winds.

In a very advantageous form of construction of the float according to the invention, the float is provided with a supported electricity cable and/or conduit.

Extremely good results are obtained with the float according to the invention if its buoyancy is so adjusted with the aid of the weighting means that the float is submerged, through the action of the load carried by it, to such a depth that its upper side lies flush with the surface of the liquid in which the float is disposed.

The invention also relates to a floating conveying line comprising one or more floats locally supporting the line, characterized in that it is provided with floats forming the object of the present invention.

The invention will now be explained with the aid of the accompanying drawings, in which:

Figure 1 is a cross-section through a float according to the invention,

Figure 2 is a longitudinal section through a float according to the invention, and

Figure 3 shows a conveying line with floats according to the invention.

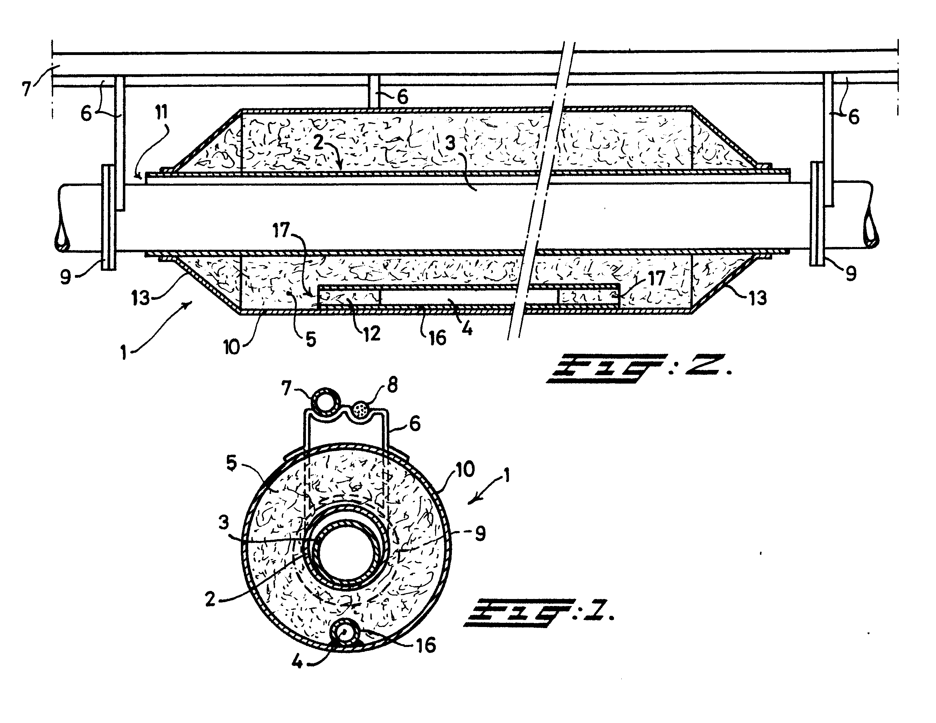

In Figure 1 an outer wall 10 of a float 1 is shown, together with a inner wall 2. A conveying line conduit, 3 is received with ample clearance in a cylindrical cavity 11 formed by the inner wall 2.

The float contains near the outer wall an elongate cavity 12 containing a concrete bar 4 serving as weighting means, so that the centre of gravity of the float lies eccentrically in relation to the centre line of the float 1, and thus the rolling of the float is counteracted in optimum manner, so that damage under storm conditions is practically eliminated. Although the entire space 12 may be filled with concrete, it may be advisable to use a concrete bar or other heavy element 4 whose weight can be varied, so that the desired buoyancy for each conduit 3 can be achieved.

The elongate cavity 12 may extend over the entire length of the float 1, or else over only a part of the length of the float.

Although mention is made above of a concrete bar 4 as weighting means, it will be clear that it is also possible to use other materials as weighting means.

The inner wall 12 and the outer wall 10 expediently consist of glass fibre reinforced thermosetting synthetic resin reinforcing layers, which also extend over the conical end 13 of the float 1.

The space between the inner wall 2 and the outer wall 10 consists for example of polyurethane foam 5. On the upper side of the float body a support trough 6 with brackets is provided to support, for example, service lines fastened thereon by means not shown, for example a fresh water pipe 7 and an electricity cable 8. The parts of the support trough 6 intended to support the pipe and the cable are advantageously covered covered with a suitable material, for example rubber or plastics material, while those parts of the support trough which rest on the outer wall 10 may also be covered with such material.

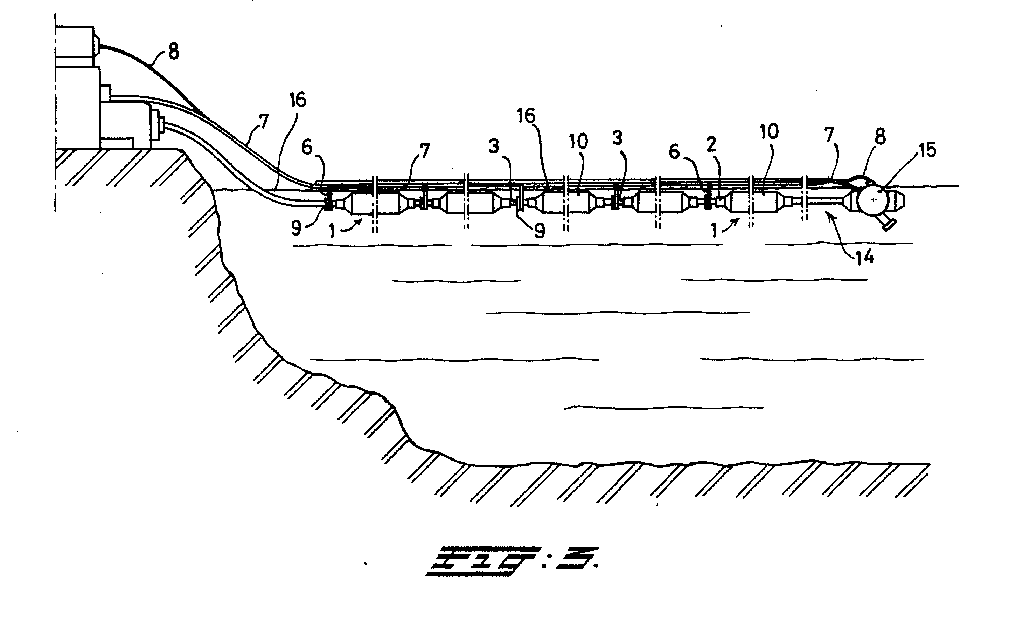

In Figure 2 the same parts as those shown in Figure 1 are given the same reference numerals. In Figure 2 the torpedo shape of the two ends 13 of the float 2 can be clearly seen; this shape makes the float less sensitive to the action of water flowing along it. A support channel 6 rests on the outside of the float and is for example fastened to the flanges 9 of the conduit 3 requiring support. The support channels can of course be fastened in some other manner.

Finally, in Figure 3 a conveying line 13 is shown, for example for conveying water containing potassium salts from the Dead Sea to the shore; a conveying line 13 composed of a plurality of conveying conduits 3 and floats 1 is connected to a submerged pump 14. From the shore an electricity cable 8 and a fresh water pipe 7 extend to the pump 14.

Skilful selection of the weighting means 4 makes it possible to ensure that the upper side of the float lies just under the water surface 15 and is therefore less liable to damage by storms.

In one specific example of a form of construction of a float according to the invention, a steel conveying conduit 3 having a diameter of 300 mm is surrounded by a float body 1 consisting of an element comprising an inner tube 2 made of glass fibre reinforced polyester having a diameter of 400 mm and coaxially surrounded by an outer glass fibre reinforced polyester pipe 11 having a diameter of 800 mm, with polyurethane foam 5 disposed between said tubes.

In the arrangement shown in Figure 1 the cavity 12 contains a plastics tube 16 having a diameter of 150 mm, which is filled with concrete. Diametrically opposite the tube 12 filled with concrete is disposed a support trough for a fresh water pipe 7 and an electricity cable 8; at the parts carrying said pipe 7 and said cable 8 and on the surface of contact between the support trough brackets and the outer wall of the float body 1, said trough is covered with rubber. When completely loaded with the conveying line 3 and the fresh water pipe 7, the upper side of the float lies approximately flush with the surface of the water in which the float is situated.

The cavity 12 is expediently closed at its end faces 17 by the foam plastics material in the float, so that the weighting means 4 will not come into contact with the water in which the float is disposed.

The cavity 12 expediently consists of a plastics tube 16, for example of polyvinyl chloride or fibre reinforced theremosetting resin.

**Claims**

1. Foam plastics float for locally supporting a conveying line close to the surface of a liquid, characterized in that the float(1) is provided with weighting means(4)for adjusting the buoyancy of the float(1).

2. Float according to Claim 1, characterized in that the weighting means(4)are disposed in the float (1) in such a manner that the centre of gravity of the float lies eccentrically in relation to the centre line of the float (1).

3. Float according to Claim 1 or 2, characterized in that the weighting means(4)are in the form of rods(4)

4. Float according to Claims 1 to 3, characterized in that the float (1)is provided with at least one channel,(12) which extends in the longitudinal direction of the float and is preferably closed at both ends, and in which the weightingmeans (4)are disposed.

5. Float according to Claim 4, characterized in that the channel(12)is disposed near the outer wall (16) or the float(1).

6. Float according to one or more of Claims 1 to 5, characterized in that thefloat (1)is provided internally with a channel (2)for receiving a conveying line.(3)

7. Float according to one or more of Claims 1 to 6, characterized in that thefloat (1)is provided with a supportmeans (6)fastened on its outside.

8. Float according to Claim 7, characterized in that the supportmeans (6)is constructed to support one or more service lines (7,8).

9. Float according to one or more of Claims 6 to 8, characterized in that it is provided with a supported electricity cable and/or conduit.

10. Float according to one or more of Claims 1 to 9, characterized in that with the aid of the weighting means (4)the buoyancy is so adjusted that under the action of the load which it supports thefloat (1)is submerged to such a depth that its upper side lies flush with the surface of the liquid in which the float is disposed.

11. Floating conveying line comprising one or more floats locally supporting it, characterized in that it is provided with one or morefloats (1)- according to one or more of the preceding Claims 1 to 10.

*F⊑⊑:2.*

*F⊑⊑:1.*

0 216 418

Fig. 5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | FR-A-2 352 645 (COJEAN)<br>* Page 8, claim 1 * | 1,6,11 | F 16 L 1/04 |
| A | | 10 | |
| A | US-A-4 448 266 (POTTS)<br>* Column 7, lines 46-65; figure 6 * | 1-5 | |
| A | US-A-4 477 207 (JOHNSON)<br>* Abstract; figure 2 * | 1,6-9 | |

**TECHNICAL FIELDS SEARCHED (Int. Cl.4)**

F 16 L
E 21 B
B 63 B

The present search report has been drawn up for all claims

| Place of search | Date of completion of the search | Examiner |
|---|---|---|
| THE HAGUE | 28-11-1986 | HUBEAU M.G. |